# EUROPÄISCHE PATENTSCHRIFT

(11) **EP 1 168 557 B1**
(45) Veröffentlichungstag und Bekanntmachung des Hinweises auf die Patenterteilung: **18.08.2004**
(21) Anmeldenummer: 01114521.6
(22) Anmeldetag: 16.06.2001
(51) Int. Cl.: H02G 3/14

(54) **Abdeckung für Elektro-Installationsgeräte insbesondere in Unterputz-Ausführung**
Cover for electrical installation apparatus, in particular for flush mounting
Couvercle pour appareil d'installation électrique, en particulier pour un montage à affleurement

(30) Priorität: 01.07.2000 DE 20011553 U
(43) Veröffentlichungstag der Anmeldung: 02.01.2002
(73) Patentinhaber: GIRA GIERSIEPEN GmbH. & CO. KG, D-42477 Radevormwald (DE)
(72) Erfinder: Borowski, Gudrun, 58256 Ennepetal (DE); Gediger, Frank, 42275 Wuppertal (DE); Riediger, Frank, 42929 Wermelskirchen (DE)
(74) Vertreter: Patentanwälte Dr. Solf & Zapf

(56) Entgegenhaltungen:
- EP-A- 0 961 374
- FR-A- 1 457 719
- PATENT ABSTRACTS OF JAPAN vol. 1996, no. 08, 30. August 1996 (1996-08-30) & JP 08 098366 A (MATSUSHITA ELECTRIC WORKS LTD), 12. April 1996 (1996-04-12)

## Beschreibung

Die vorliegende Erfindung betrifft eine Abdeckung für Elektro-Installationsgeräte, wie Schalter, Steckdosen und dergleichen, bestehend aus einem Abdeckteil, das über Haltemittel mit einem Basisteil verbindbar ist.

Bei Unterputz-Installationsgeräten sitzt üblicherweise deren Geräteeinsatz in einer Wanddose und wird darin über einen flächig auf der Wand- bzw. Montagefläche liegenden Tragring gehalten. Der Geräteeinsatz weist einen Zentraleinsatz auf, der z.B. im Falle eines Schalters von mindestens einer Schalterwippe oder im Falle einer Steckdose von einem sog. Schuko-Topf gebildet ist. Der den jeweiligen Zentraleinsatz umschließende Übergangsbereich zur Wand- bzw. Montagefläche wird dabei in der Regel durch ein einteiliges, flaches, rahmenförmiges Abdeckteil abgedeckt. Dieses Abdeckteil wird dabei an einem Basisteil befestigt, und zwar üblicherweise mittelbar über den jeweiligen Zentraleinsatz an dem Installationsgerät. Da oftmals - insbesondere bei Schaltern - der Zentraleinsatz ausschließlich über lösbare Rast- oder Klemmverbindungen an dem Installationsgerät befestigt wird, kann in manchen Fällen die Befestigung des Abdeckteils unzureichend sein, so daß zwischen dem Abdeckteil und dem Basisteil bzw. der jeweiligen umliegenden Wand- oder Montagefläche unschöne und gegebenenfalls ungleichmäßige Spaltabstände entstehen könnten. Dies ließe sich allenfalls durch Schraubverbindungen beheben, was aber zu einem erhöhten Montageaufwand führen würde.

Der vorliegenden Erfindung liegt die Aufgabe zugrunde, unter Aufrechterhaltung einer einfachen und schnellen Montagemöglichkeit die Montagegenauigkeit und optische Akkuratesse im Bereich des Abdeckteils zu verbessern.

Erfindungsgemäß wird dies durch eine Abdeckung nach dem Anspruch 1 erreicht, wobei als Haltemittel Steck-Rastverbindungen derart vorgesehen sind, daß zwischen dem Abdeckteil und dem Basisteil eine diese beiden Teile gegeneinander ziehende Vorspannkraft erzeugt wird. Dadurch kann das Abdeckteil auf einfache Weise aufgesteckt und verrastet werden, wobei es aber vorteilhafterweise durch die Vorspannkraft selbsttätig in eine optimale Montagelage eingezogen wird. Unschöne Spaltabstände zwischen dem Abdeckteil und dem Basisteil und/oder der Wand- bzw. Montagefläche werden somit wirkungsvoll vermieden bzw. beseitigt. Dazu ist es besonders zweckmäßig, wenn das im wesentlichen mit rechteckiger oder quadratischer Außenkontur ausgebildete Abdeckteil über insbesondere vier in seinen Eckbereichen angeordnete Steck- Rastverbindungen mit dem Basisteil verbindbar ist, wobei jede Steck-Rastverbindung eine entsprechende Vorspannkraft erzeugt. Hierdurch wird das Abdeckteil vorteilhafterweise über seinen gesamten Randbereich hinweg sehr gleichmäßig selbsttätig herangezogen.

Weitere vorteilhafte Ausgestaltungsmerkmale der Erfindung sind in den Unteransprüchen enthalten.

Anhand eines in der Zeichnung veranschaulichten, bevorzugten Ausführungsbeispiels soll die Erfindung genauer erläutert werden. Dabei zeigen:

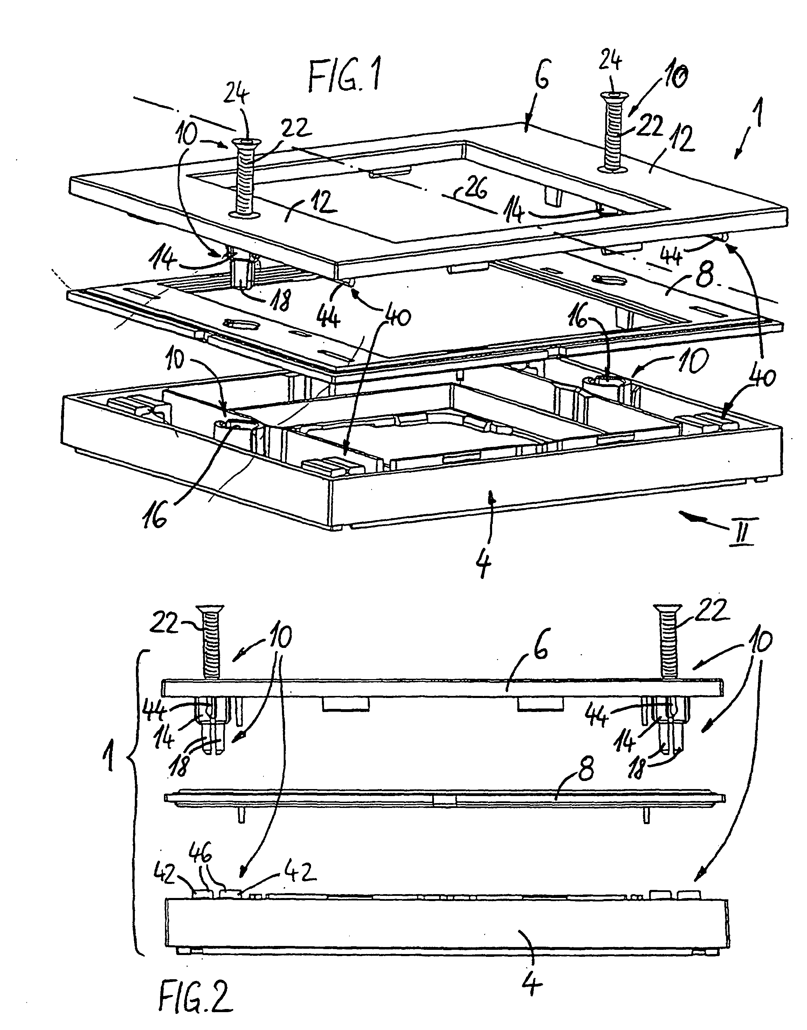

- Fig. 1: eine erfindungsgemäße Abdeckung in einer perspektivischen Explosionsdarstellung der Einzelteile,
- Fig. 2: die Anordnung nach Fig. 1 in Seitenansicht (Pfeilrichtung II),
- Fig. 3: eine perspektivische Querschnittansicht der wesentlichen Bestandteile vor deren Montage,
- Fig. 4: eine Ansicht analog zu Fig. 3 im zusammengesetzten, aber noch nicht arretierten Zustand,
- Fig. 5: eine Darstellung wie in Fig. 4 zusammen mit einem Zentraleinsatz,
- Fig. 6: eine Ansicht ähnlich Fig. 3, jedoch weitergehend geschnitten,
- Fig. 7: den zusammengesetzten Zustand ähnlich Fig. 4 mit zusätzlichem Schnitt nach Fig. 6,
- Fig. 8: einen Diagonalschnitt durch die zusammengesetzte und arretierte Anordnung im Bereich einer Steck-Schraubverbindung,
- Fig. 9: eine vergrößerte Teilansicht eines als Trägerrahmen ausgebildeten Basisteils mit von einem das eigentliche Abdeckteil bildenden Blendrahmen getrennt dargestellten Bestandteilen,
- Fig. 10: eine Ansicht ähnlich Fig. 9 aus anderem Blickwinkel,
- Fig. 11: eine Perspektivansicht auf den gesamten Trägerrahmen (Oberseite) und
- Fig. 12: eine Perspektivansicht des Trägerrahmens auf dessen Montageseite (Unterseite).

In den verschiedenen Figuren der Zeichnungen sind gleiche Teile stets mit den gleichen Bezugsziffem versehen.

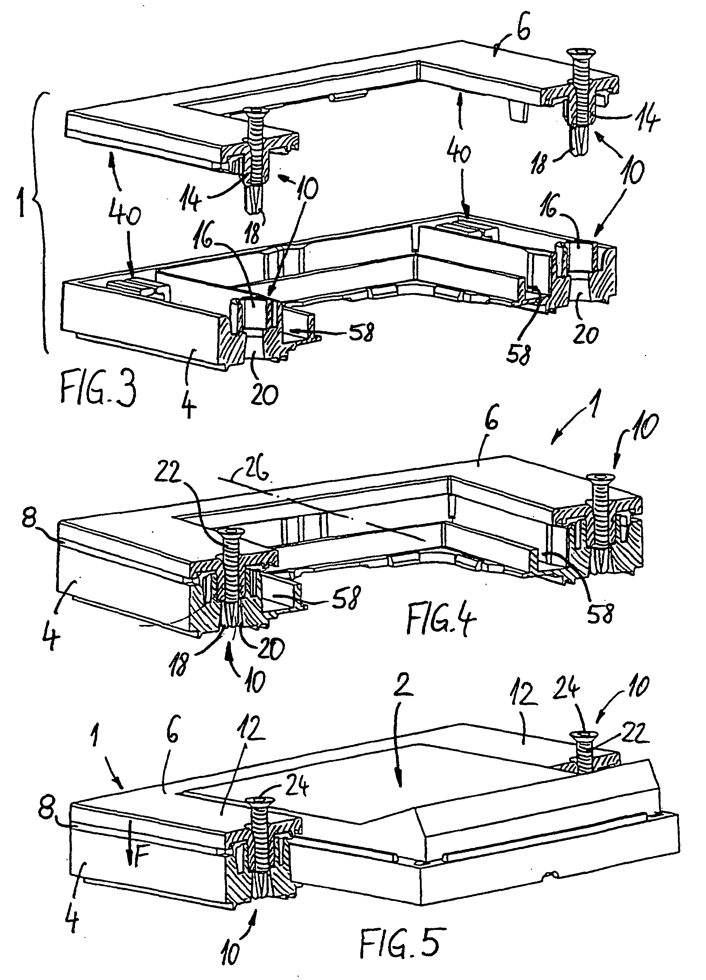

Eine beispielhaft in den Zeichnungsfiguren veranschaulichte Abdeckung 1 bildet hier eine Rahmen-Anordnung und gehört zu einem selbst nicht dargestellten Elektro-Installationsgerät (Schalter, Steckdose oder dergleichen), und zwar insbesondere zu einem Unterputz-Gerät. Die Rahmen-Anordnung 1 bildet insgesamt ein an dem Installationsgerät befestigbares Rahmenelement zum Abdecken eines einen Zentraleinsatz 2 des Installationsgerätes (vgl. dazu insbesondere Fig. 5) umschließenden Flächenbereichs.

Die Abdeckung 1 bzw. das Rahmenelement besteht aus einem Abdeckteil, das über Haltemittel an einem Basisteil befestigbar ist. Im dargestellten, bevorzugten Ausführungsbeispiel ist das Basisteil von einem an dem Installationsgerät befestigbaren Trägerrahmen 4 gebildet, während das Abdeckteil als ein an dem Trägerrahmen 4 diesen überdeckend befestigbarer Blendrahmen 6 ausgebildet ist. Vorzugsweise ist zusätzlich ein sandwichartig zwischen dem Trägerrahmen 4 und dem Blendrahmen 6 anzuordnender Zwischenrahmen 8 vorgesehen. Dieser Zwischenrahmen 8 dient hauptsächlich als Gestaltungselement zur Erzeugung einer Art von Schattenfuge zwischen dem Trägerrahmen 4 und dem Blendrahmen 6 (siehe z.B. Fig. 4 und 5). Zweckmäßigerweise ist der Zwischenrahmen 8 zur Vormontage insbesondere an dem Blendrahmen 6 fixierbar. Dies kann beispielsweise dadurch erreicht werden, daß der Zwischenrahmen 8 mit Öffnungen zumindest kraftschlüssig auf Ansätzen des Blendrahmens 6 sitzt.

Wie sich beispielsweise aus Fig. 4 und 5 ergibt, liegen der Trägerrahmen 4, der Blendrahmen 6 und gegebenenfalls der Zwischenrahmen 8 in ihrem montierten, miteinander verbundenen Zustand im Bereich ihrer äußeren Ränder im wesentlichen deckungsgleich (kongruent) aufeinander. Der Zwischenrahmen 8 könnte allerdings auch etwas zurückspringen zur Bildung einer noch ausgeprägteren Schattenfuge.

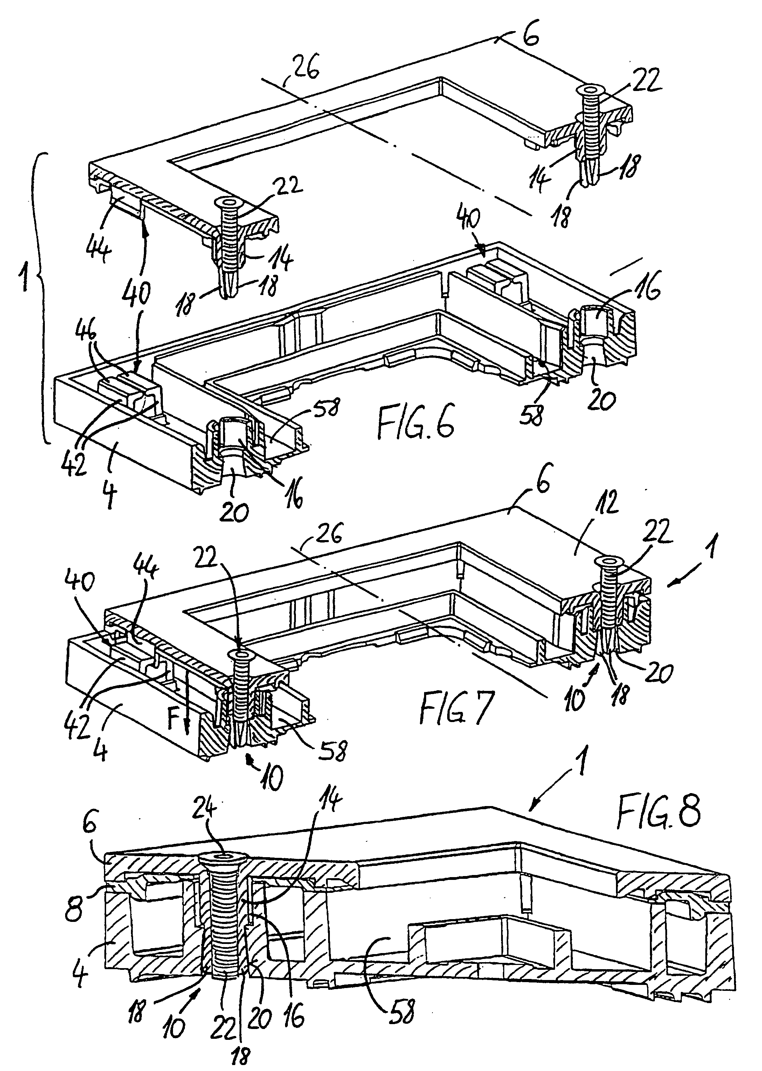

Vorzugsweise ist der Blendrahmen 6 an dem Trägerrahmen 4 unter anderem auch über Steck-Schraub-Haltemittel derart befestigbar, daß eine Montage allein durch einen senkrecht zu den Rahmenebenen ausgerichteten Steckfügevorgang, eine Demontage aber nur nach einem Schraublösevorgang durchführbar ist. Im dargestellten, bevorzugten Ausführungsbeispiel bestehen die Steck-Schraub-Haltemittel aus zwei jeweils in diametral gegenüberliegenden Rahmenbereichen, insbesondere jeweils mittig im Bereich von zueinander parallelen, gegenüberliegenden Rahmenstegen 12, angeordneten Steck-Schraubverbindungen 10. Jede Steck-Schraubverbindung 10 besteht aus einem Steckansatz 14 des Blendrahmens 6 und aus einer Steckaufnahme 16 des Trägerrahmens 4. Der in die Steckaufnahme 16 einzusteckende Steckansatz 14 weist an seinem Ende Spreizarme 18 auf, die in eine Erweiterung 20 der Steckaufnahme 16 eingreifen und mittels einer durch den Steckansatz 14 einsteckbaren Schraube 22 dübelartig zur kraft- und/oder formschlüssigen Anlage in der Erweiterung 20 spreizbar sind. Diese montierte Arretierstellung ist in Fig. 8 dargestellt. Die Schraube 22 kann zweckmäßig von einer üblichen Senkkopfschraube, beispielsweise in der Größe M3, gebildet sein. Der - in optisch ansprechender Weise in einer Ansenkung des Blendrahmens 6 versenkt anzuordnende - Schraubenkopf weist bevorzugt einen Innenkraftangriff 24 für ein nicht dargestelltes Schrauberwerkzeug auf. Besonders geeignet ist eine sog. "Torx"-Schraube oder einen Innensechskantschraube (Inbusschraube). Die Spreizarme 18 weisen auf ihren einander zugekehrten Innenseiten einen entsprechenden Gegenkonus (nicht bezeichnet) derart auf, daß durch ein einfaches Einstecken der Schraube 22 - ohne Rotation - die Spreizarme 18 radial nach außen gespreizt werden (Fig.8). Dadurch entsteht im Bereich der gespreizten Spreizarme 18 zwischen diesen und dem Gewinde der Schraube 22 ein Kraft- und/oder Kraftformschluß derart, daß die Schraube 22 aus ihrer eingesteckten Montageposition (Fig. 8) durch Herausschrauben in eine die Spreizung der Spreizarme 18 aufhebende Löseposition überführbar ist (z.B. Fig. 7). Nachfolgend können die Rahmenteile 4, 6 wieder voneinander abgezogen werden.

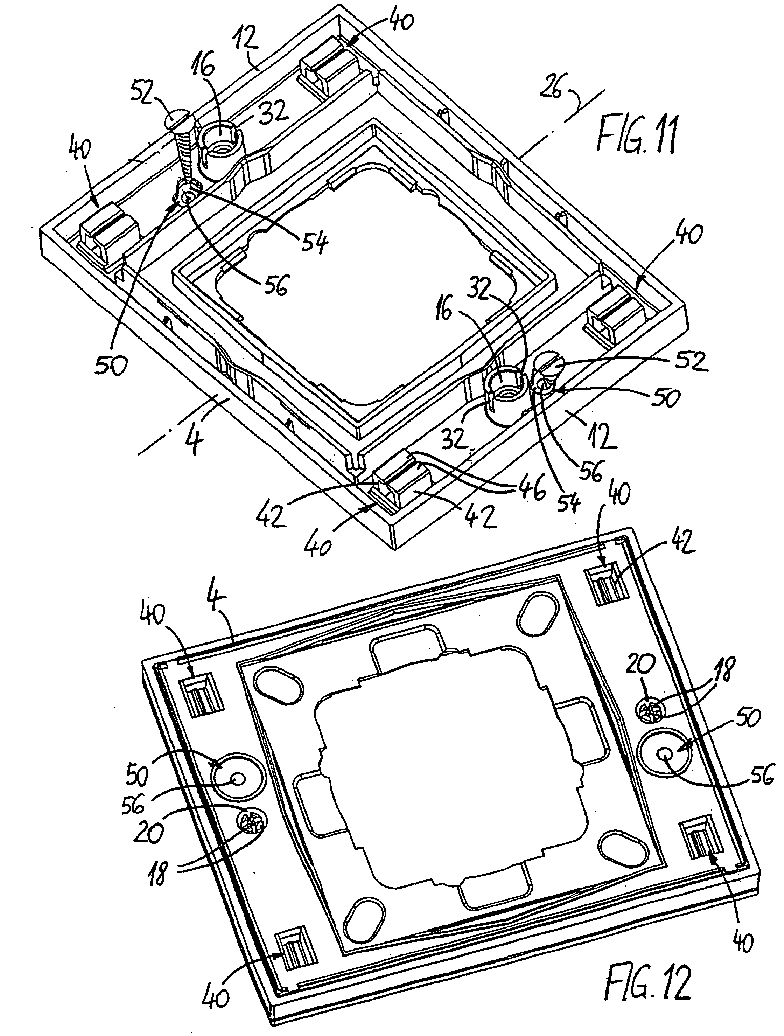

In dem dargestellten, bevorzugten Ausführungsbeispiel sind die Steck-Schraubverbindungen 10 derart ausgebildet, daß durch den Steckfügevorgang eine selbsttätige Ausrichtung des Blendrahmens 6 relativ zu dem Trägerrahmen 4 in eine definierte Relativposition erfolgt, in der beide Teile am Außenrand vorzugsweise deckungsgleich angeordnet sind. Zu diesem Zweck der selbsttätigen Justierung ist die Erweiterung 20 jeder Steckaufnahme 16 als Innenkonus ausgebildet, und jeder Steckansatz 14 weist endseitig mindestens drei, wie dargestellt bevorzugt vier (vgl. Fig. 12) radialsymmetrische Spreizarme 18 auf. Dadurch wird beim Spreizen der Spreizarme 18 eine Selbstzentrierung des Steckansatzes 14 innerhalb der Steckaufnahme 16 und damit die erwähnte Selbstausrichtung der Relativposition zwischen Blendrahmen 6 und Trägerrahmen 4 erreicht.

Alternativ zu dieser dargestellten Ausführungsform können die Steck-Schraubverbindungen 10 auch derart ausgebildet sein, daß bei (während) oder nach dem Steckfügevorgang eine manuelle Justierung der Relativposition zwischen Blendrahmen 6 und Trägerrahmen 4 in Richtung wenigstens einer Justierachse 26 durchführbar ist. Die Justierachse 26 verläuft bevorzugt parallel zu zwei gegenüberliegenden Rahmenstegen, insbesondere zu den beiden Rahmenstegen 12, die jeweils die Steck-Schraubverbindungen 10 aufweisen. Für diese manuelle Justierbarkeit würde dann in Abweichung von der dargestellten Ausführungsform die Erweiterung 20 der Steckaufnahme 16 beispielsweise aus zwei gegenüberliegenden dachartig schrägen Innenflächen bestehen, wobei der Steckansatz 14 endseitig nur zwei zur Anlage an den schrägen Innenflächen entsprechend gegenüberliegende Spreizarme 18 derart aufweisen würde, daß der Steckansatz 14 innerhalb der Steckaufnahme 16 in Richtung einer Symmetrieachse (nicht eingezeichnet) der Spreizarme 18 bzw. der dachförmig schrägen Innenflächen justierbar ist. Die genannte Symmetrieachse verläuft dabei parallel zu der Justierachse 26 von Blend- und Trägerrahmen 6, 4.

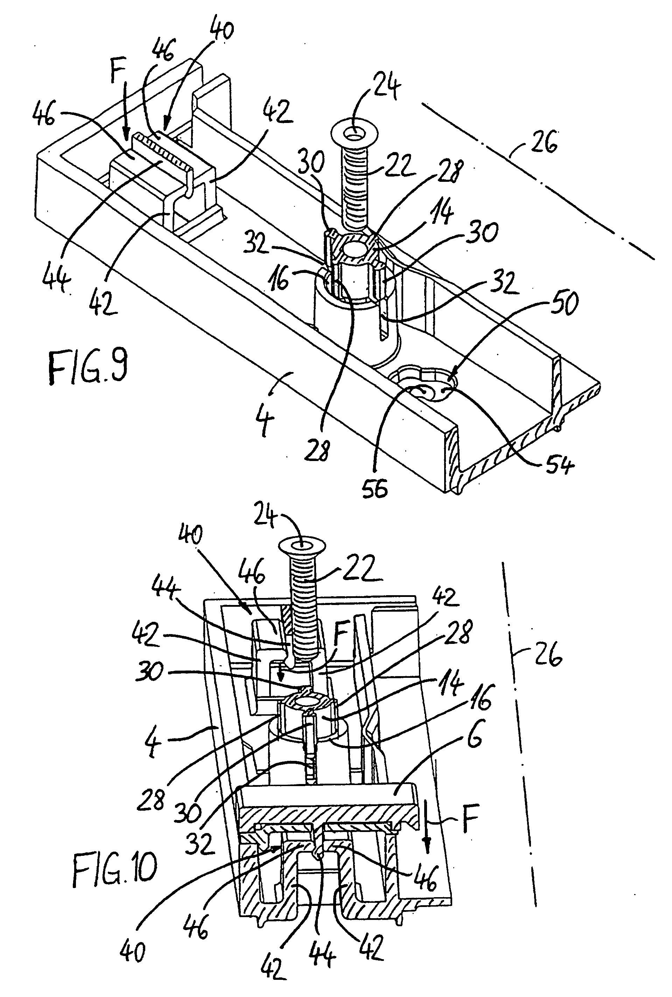

Im Übrigen greift jeder Steckansatz 14 zumindest kraftschlüssig in die zugehörige Steckaufnahme 16 ein. Für die beschriebene alternative Möglichkeit der manuellen Justierbarkeit kann jeder Steckansatz 14 derart in die zugehörige Steckaufnahme 16 eingreifen, daß er darin in Richtung einer ebenfalls nicht eingezeichneten Einstellachse relativ beweglich ist. Dabei verläuft auch diese Einstellachse parallel zu der Justierachse 26 von Blend- und Trägerrahmen 6, 4. Wie in den Zeichnungsfiguren dargestellt ist, ist jeder Steckansatz 14 im Wesentlichen hohlzylindrisch mit einem Außendurchmesser ausgebildet, der kleiner als der Innendurchmesser der - bevorzugt als ebenfalls hohlzylindrischer Ansatz des Trägerrahmens 4 gebildeten - Steckaufnahme 16 ist. Dabei weist der Steckansatz 14 auf seinem Außenumfang mindestens zwei längliche und in Steckrichtung verlaufende, sich vom Steckansatz 14 weg radial in entgegengesetzte Richtungen sowie senkrecht zu der Justierachse 26 erstreckende Anlagerippen 28 zur kraftschlüssigen Anlage innerhalb der Steckaufnahme 16 auf. Es wird hierzu insbesondere auf die vergrößerten Detaildarstellungen in Fig. 9 und 10 hingewiesen. Demnach weist jeder Steckansatz 14 weiterhin auf seinem Außenumfang zwei längliche und in Steckrichtung verlaufende, sich vom Steckansatz 14 weg radial in entgegengesetzte Richtungen und dabei parallel zur Justierachse 26 erstreckende Einsteckrippen 30 auf, die zum kraftschlüssigen Einstecken in korrespondierende Aufnahmeschlitze 32 der Steckaufnahme 16 dienen. Diese Ausgestaltung ermöglicht eine Justierbewegung wahlweise in Richtung jeweils einer der beiden Einsteckrippen 30 innerhalb der Steckaufnahme 16 in Richtung der Justierachse 26.

Gegebenenfalls unabhängig von den Steck-Schraubverbindungen 10 oder aber zusätzlich dazu ist jedenfalls erfindungsgemäß vorgesehen, daß der Blendrahmen 6 mit dem Trägerrahmen 4 über - insbesondere vier in Rahmeneckbereichen angeordnete - Steck-Rastverbindungen 40 verbindbar ist. Hierbei ist jede Steck-Rastverbindung 40 vorteilhafterweise derart ausgebildet, daß zwischen Blendrahmen 6 und Trägerrahmen 4 eine die beiden Teile gegeneinander ziehende Vorspannkraft F erzeugt wird. Diese Ausgestaltung ist insbesondere für größere Rahmenanordnungen wichtig, und zwar auch im Zusammenhang mit den vorzugsweise mittig im Bereich der Rahmenstege 12 angeordneten Steck-Schraubverbindungen 10. Durch die erfindungsgemäßen Steck-Rastverbindungen 40 und die dadurch erzeugte Vorspannkraft F wird stets ein "Selbsteinzug" gewährleistet, so daß die Rahmenteile über ihren gesamten Umfangsbereich hinweg fest und bündig aneinander liegen. Dabei kann jede Steck-Rastverbindung 40 auch derart ausgebildet sein, daß sie die oben erwähnte manuelle Justierung zwischen Blendrahmen 6 und Trägerrahmen 4 in Richtung der Justierachse 26 ermöglicht.

Im dargestellten Ausführungsbeispiel besteht jede Steck-Rastverbindung 40 einerseits aus zwei federelastischen Rastarmen 42 und andererseits aus einem zwischen die Rastarme 42 einsteckbaren Steckeransatz 44. Im dargestellten Beispiel sind die Rastarme 42 einstückige Bestandteile des Trägerrahmens 4 und der Steckeransatz 44 einstückiger Bestandteil des Blendrahmens 6. Eine Umkehrung (kinematische Umkehr) ist aber ebenfalls möglich. Die Rastarme 42 wirken mit dem Steckeransatz 44 über nicht bezeichnete Schrägflächen derart zusammen, daß durch ihre Federelastizität über die Schrägflächen die die Rahmenteile 4, 6 zusammenziehende Vorspannkraft F erzeugt wird. Hierzu wird insbesondere auf Fig. 9 und 10 verwiesen. Die Rastarme 42 weisen an ihren freien Enden einander zugekehrte Andruckstege 46 zur federnden, klemmenden Anlage an dem Steckeransatz 44 auf. Der Steckeransatz 44 ist bevorzugt nach Art eines Flachsteckers ausgebildet, so daß er in seinem zwischen die parallelen Rastarme 42 eingesteckten Zustand relativ zu diesen in Richtung einer Querachse beweglich ist, die wiederum parallel zu der Justierachse 26 verläuft. Auf diese Weise wird auch im Bereich der Steck-Rastverbindungen 40 die oben beschriebene Alternative der manuellen Justierbarkeit ermöglicht.

Wie sich noch aus Fig. 9, 11 und 12 ergibt, kann der Trägerrahmen 4 mit Vorteil in von dem Blendrahmen 6 überdeckten Bereichen Schraubenlöcher 50 für beispielhaft in Fig. 11 dargestellte Befestigungsschrauben 52 aufweisen, die zur zusätzlichen Schraubbefestigung des Trägerrahmens 4 im jeweils neben dem Installationsgerät liegenden Bereich einer Montagefläche dienen. Hierbei ist es vorteilhaft, wenn jedes Schraubenloch 50 als Langlochöffnung ausgebildet ist, weil hierdurch auch bezüglich der zusätzlichen Schraubbefestigung eine Justagemöglichkeit gegeben ist. Weiterhin ist es hierbei vorteilhaft, wenn im Bereich jedes Schraubenloches 50 bzw. jeder Langlochöffnung vor der ersten Montage ein verdünnter, herausbrechbarer Wandungsabschnitt 54 angeordnet ist, wobei dieser Wandungsabschnitt 54 ein - bezogen auf die Langlochöffnung - zentrisches, kreisförmiges Anreißloch 56 aufweist.

Wie weiterhin am besten in Fig. 9 erkennbar ist, kann jede Langlochöffnung 50 durch zwei konzentrisch "ineinanderliegende", gegeneinander winkelversetzte Langlöcher gebildet sein. Hierdurch wird eine besonders gute Justiermöglichkeit erreicht. Der herausbrechbare Wandungsabschnitt 54 mit dem Anreißloch 56 gestattet ein einfaches Anzeichnen der für die Schraubbefestigung in der Montagefläche herzustellenden Dübelbohrung. Nach dem Anzeichnen kann dann der Wandungsabschnitt 54 entfernt werden, wodurch die gesamte Langlochöffnung 50 zum Justieren gegenüber der Schraube 52 zur Verfügung steht.

Abschließend sei der Vollständigkeit halber noch erwähnt, daß die Rahmen-Anordnung in der dargestellten Ausführungsform speziell für wassergeschützte Geräte einsetzbar ist. Beispielsweise besitzt dazu gemäß Fig. 3 und 4 der Trägerrahmen 4 umlaufende, kanalartige Kammern 58 zur Wasseraufnahme und -ableitung nach Außen, um ein Eindringen von Wasser in den Bereich des eigentlichen Installationsgerätes zu verhindern.

## Patentansprüche

1. Abdeckung (1) für Elektro-Installationsgeräte, wie Schalter, Steckdosen und dergleichen, bestehend aus einem Abdeckteil (6), das über Haltemittel mit einem Basisteil (4) verbindbar ist,
**dadurch gekennzeichnet, , dass** die Haltemittel von Steck-Rastverbindungen (40) derart gebildet sind, daß zwischen dem Abdeckteil (6) und dem Basisteil (4) eine diese beiden Teile gegeneinander ziehende Vorspannkraft (F) erzeugt wird.

2. Abdeckung nach Anspruch 1,
**dadurch gekennzeichnet, dass** das im Wesentlichen mit rechteckiger oder quadratischer Außenkontur ausgebildete Abdeckteil (6) über insbesondere vier in seinen Eckbereichen angeordnete Steck-Rastverbindungen (40) mit dem Basisteil (4) verbindbar ist, wobei jede Steck-Rastverbindung (40) eine Vorspannkraft (F) erzeugt.

3. Abdeckung nach Anspruch 1 oder 2,
**dadurch gekennzeichnet, dass** das Basisteil als ein an dem Installationsgerät befestigbarer Trägerrahmen (4) und das Abdeckteil als ein an dem Trägerrahmen (4) diesen überdeckend befestigbarer Blendrahmen (6) ausgebildet sind, wobei Träger- und Blendrahmen (4, 6) gemeinsam zum Abdecken eines einen Zentraleinsatz (2) des Installationsgerätes umschließenden Flächenbereichs dienen.

4. Abdeckung nach Anspruch 3,
**dadurch gekennzeichnet, dass** der Blendrahmen (6) an dem Trägerrahmen (4) zusätzlich über Steck-Schraub-Haltemittel (10) derart befestigbar ist, daß eine Montage allein durch einen Steckfügevorgang sowie eine Demontage nur nach einem Schraublösevorgang durchführbar sind.

5. Abdeckung nach Anspruch 3 oder 4,
**gekennzeichnet durch** einen sandwichartig zwischen dem Trägerrahmen (4) und dem Blendrahmen (6) anzuordnenden Zwischenrahmen (8).

6. Abdeckung nach Anspruch 5,
**dadurch gekennzeichnet, dass** der Zwischenrahmen (8) zur Vormontage insbesondere an dem Blendrahmen (6) fixierbar ist.

7. Abdeckung nach einem der Ansprüche 3 bis 6,
**dadurch gekennzeichnet, dass** der Trägerrahmen (4), der Blendrahmen (6) und gegebenenfalls der Zwischenrahmen (8) in ihrem montierten, miteinander verbundenen Zustand im Bereich ihrer äußeren Ränder im wesentlichen deckungsgleich aufeinander liegen.

8. Abdeckung nach einem der Ansprüche 4 bis 7,
**dadurch gekennzeichnet, dass** die Steck-Schraub-Haltemittel aus mindestens zwei in diametral gegenüberliegenden Rahmenbereichen, insbesondere jeweils mittig im Bereich von zueinander parallelen Rahmenstegen (12), angeordneten Steck-Schraubverbindungen (10) bestehen.

9. Abdeckung nach Anspruch 8,
**dadurch gekennzeichnet, dass** jede Steck-Schraubverbindung (10) aus einem Steckansatz (14) des Blendrahmens (6) und aus einer Steckaufnahme (16) des Trägerrahmens (4) besteht, wobei der in die Steckaufnahme (16) einzusteckende Steckansatz (14) an seinem Ende Spreizarme (18) aufweist, die in eine Erweiterung (20) der Steckaufnahme (16) eingreifen und mittels einer durch den Steckansatz (14) einsteckbaren Schraube (22) spreizbar sind.

10. Abdeckung nach Anspruch 9,
**dadurch gekennzeichnet, dass** zwischen dem Blendrahmen (6) und dem Gewinde der eingesteckten Schraube (22), insbesondere im Bereich der gespreizten Spreizarme (18), ein Kraft- und/oder Kraftformschluß derart besteht, daß die Schraube (22) aus ihrer eingesteckten Montageposition durch Herausschrauben in eine die Spreizung der Spreizarme (18) aufhebende Löseposition überführbar ist.

11. Abdeckung nach einem der Ansprüche 4 bis 10,
**dadurch gekennzeichnet, dass** die Steck-Schraub-Haltemittel (10) derart ausgebildet sind, daß durch den Steckfügevorgang eine selbsttätige Ausrichtung des Blendrahmens (6) relativ zu dem Trägerrahmen (4) in eine definierte Relativposition erfolgt.

12. Abdeckung nach einem der Ansprüche 9 bis 11,
**dadurch gekennzeichnet, dass** die Erweiterung (20) der Steckaufnahme (16) als Innenkonus ausgebildet ist und der Steckansatz (14) endseitig mindestens drei radialsymmetrische Spreizarme (18) aufweist, so daß beim Spreizen eine Selbstzentrierung des Steckansatzes (14) innerhalb der Steckaufnahme (16) und damit eine Selbstausrichtung der Relativposition zwischen Blendrahmen (6) und Trägerrahmen (4) erreicht wird.

13. Abdeckung nach einem der Ansprüche 4 bis 10,
**dadurch gekennzeichnet, dass** dieSteck-Schraub-Haltemittel (10) derart ausgebildet sind, daß bei oder nach dem Steckfügevorgang eine manuelle Justierung der Relativposition zwischen Blendrahmen (6) und Trägerrahmen (4) in Richtung wenigstens einer Justierachse (26) durchführbar ist, wobei die Justierachse (26) parallel zu zwei gegenüberliegenden Rahmenstegen (12) verläuft.

14. Abdeckung nach einem der Ansprüche 9, 10 oder 13,
**dadurch gekennzeichnet, , dass** die Erweiterung (20) der Steckaufnahme (16) aus zwei gegenüberliegenden, dachartig schrägen Innenflächen besteht und der Steckansatz (16) endseitig zwei entsprechend zur Anlage an den schrägen Innenflächen gegenüberliegende Spreizarme (18) derart aufweist, daß der Steckansatz (14) in der Steckaufnahme (16) in Richtung einer Symmetrieachse der Spreizarme (18) und der schrägen Innenflächen justierbar ist, wobei die Symmetrieachse parallel zu der Justierachse (26) von Blend- und Trägerrahmen (6, 4) verläuft.

15. Abdeckung nach einem der Ansprüche 9 bis 14,
**dadurch gekennzeichnet, dass** jeder Steckansatz (14) zumindest kraftschlüssig in die zugehörige Steckaufnahme (16) eingreift.

16. Abdeckung nach einem der Ansprüche 13 bis 15,
**dadurch gekennzeichnet, dass** jeder Steckansatz (14) derart in die zugehörige Steckaufnahme (16) eingreift, daß er darin in Richtung einer Einstellachse relativ beweglich ist, wobei die Einstellachse parallel zu der Justierachse (26) von Blend- und Trägerrahmen (6, 4) verläuft.

17. Abdeckung nach einem der Ansprüche 13 bis 16,
**dadurch gekennzeichnet, dass** jeder Steckansatz (14) im Wesentlichen hohlzylindrisch mit einem Außendurchmesser ausgebildet ist, der kleiner als der Innendurchmesser der bevorzugt ebenfalls hohlzylindrischen Steckaufnahme (16) ist, wobei der Steckansatz (14) auf seinem Außenumfang mindestens zwei längliche und in Steckrichtung verlaufende sich vom Steckansatz (14) weg radial in entgegengesetzte Richtungen und senkrecht zur Justierachse (26) bzw. zur Einstellachse erstreckende Anlagerippen (28) zur kraftschlüssigen Anlage in der Steckaufnahme (16) aufweist.

18. Abdeckung nach einem der Ansprüche 13 bis 17,
**dadurch gekennzeichnet, , dass** jeder Steckansatz (14) auf seinem Außenumfang zwei längliche und in Steckrichtung verlaufende, sich vom Steckansatz (14) weg radial in entgegengesetzte Richtungen und parallel zur Justierachse (26) bzw. zur Einstellachse erstreckende Einsteckrippen (30) zum kraftschlüssigen Einstecken in korrespondierende Aufnahmeschlitze (32) der Steckaufnahme (16) aufweist.

19. Abdeckung nach einem der Ansprüche 1 bis 18,
**dadurch gekennzeichnet, dass** jede Steck-Rastverbindung (40) derart ausgebildet ist, daß sie eine manuelle Justierung zwischen Blendrahmen (6) und Trägerrahmen (4) in Richtung einer Justierachse (26) ermöglicht.

20. Abdeckung nach einem der Ansprüche 1 bis 19,
**dadurch gekennzeichnet, dass** jede Steck-Rastverbindung (40) einerseits aus zwei federelastischen Rastarmen (42) und andererseits aus einem zwischen die Rastarme (42) einsteckbaren Steckeransatz (44) besteht, wobei die Rastarme (42) mit dem Steckeransatz (44) über Schrägflächen derart zusammenwirken, daß durch ihre Federetastizität über die Schrägflächen die die Rahmenteile (4, 6) zusammenziehende Vorspannkraft (F) erzeugt wird.

21. Abdeckung nach Anspruch 20,
**dadurch gekennzeichnet, dass** der Steckeransatz (44) nach Art eines Flachsteckers ausgebildet und in seinem zwischen die Rastarme (42) eingesteckten Zustand relativ zu diesem in Richtung einer Querachse beweglich ist, wobei die Querachse parallel zu der Justierachse (26) verläuft.

22. Abdeckung nach einem der Ansprüche 3 bis 21,
**dadurch gekennzeichnet, dass** der Trägerrahmen (4) in von dem Blendrahmen (6) überdeckten Bereichen Schraubenlöcher (50) zur zusätzlichen Schraubbefestigung im jeweils neben dem Installationsgerät liegenden Bereich einer Montagefläche aufweist.

23. Abdeckung nach Anspruch 22,
**dadurch gekennzeichnet, dass** jedes Schraubenloch (50) als Langlochöffnung ausgebildet ist.

24. Abdeckung insbesondere nach Anspruch 23,
**dadurch gekennzeichnet, dass** im Bereich jeder Langlochöffnung (50) ein verdünnter, herausbrechbarer Wandungsabschnitt (54) angeordnet ist, wobei dieser Wandungsabschnitt (54) ein bezogen auf die Langlochöffnung (50) zentrisches, kreisförmiges Anreißloch (56) aufweist.

25. Abdeckung nach Anspruch 23 oder 24,
**dadurch gekennzeichnet, dass** jedeLanglochöffnung(50) durch zwei konzentrische, gegeneinander winkelversetzte Langlöcher gebildet ist.

## Claims

1. Cover (1) for electrical wiring accessories such as switches, sockets, etc., comprising a covering part (6) which can be connected to a base part (4) via retaining means, **characterised in that** the retaining means are formed by latching plug-in connectors (40) in such a way that there is generated between the covering part (6) and the base part (4) a loading force (F) which draws these two parts towards one another.

2. Cover (1) according to claim 1, **characterised in that** the covering part (6), which is configured to a substantially rectangular or square external contour, can be connected to the base part (4) via, in particular, four latching plug-on connectors (40) arranged in its corner regions, in which case each latching plug-in connector (40) generates a loading force (F).

3. Cover (1) according to claim 1 or 2, **characterised in that** the base part is in the form of a supporting frame (4) which can be fastened to the wiring accessory, and the covering part (4) is in the form of a blanking frame (6) which can be fastened to the supporting frame (4) in such a way as to mask it, the supporting and blanking frames (4, 6) being used together to mask a surface region surrounding a central insert (2) belonging to the wiring accessory.

4. Cover (1) according to claim 3, **characterised in that** the blanking frame (6) can, in addition, be fastened to the supporting frame (4) via screwed plug-in retaining means (10) in such a way that assembly can be performed by a plug-in joining process alone and removal can be performed only after a screw releasing process.

5. Cover (1) according to claim 3 or 4, **characterised by** an intermediate frame (8) which is arranged sandwich-fashion between the supporting frame (4) and the blanking frame (6),

6. Cover (1) according to claim 5, **characterised in that**, for pre-assembly purposes, the intermediate frame (8) can be fixed to, in particular, the blanking frame (6).

7. Cover (1) according to one of claims 3 to 6, **characterised in that**, in the state in which they are assembled and connected together, the supporting frame (4) the blanking frame (6) and, where applicable, the intermediate frame (8) rest on one another in the region of their outer edges in such a way as to be substantially coincident.

8. Cover (1) according to one of claims 4 to 7, **characterised in that** the screwed plug-in retaining means comprise at least two screwed plug-in connectors (10) which are arranged in diametrically opposed frame regions and in particular are arranged centrally in the region of respective mutually parallel frame limbs (12)

9. Cover (1) according to claim 8, **characterised in that** each screwed plug-in connector (10) comprises a plug-in projection (14) from the blanking frame (6) and a receptacle (16) in the supporting frame (4), with the plug-in projection (14) which is to be plugged into the receptacle (16) having, at its end, spreadable arms (18) which engage in an extension (20) of the receptacle (16) and can be spread apart by a screw (22) which can be inserted through the plug-in projection (14).

10. Cover (1) according to claim 9, **characterised in that** a frictional and/or positive and frictional engagement exists between the blanking frame (6) and the thread of the inserted screw (22), particularly in the region of the spreadable arms (18) when spread apart, in such a way that, by being screwed out, the screw (22) can be transferred from its inserted, assembling position to a releasing position in which the spreading-apart of the spreadable arms (18) no longer occurs.

11. Cover (1) according to one of claims 4 to 10, **characterised in that** the screwed plug-in retaining means (10) are so arranged that the plug-in joining process causes the blanking frame (6) to be aligned in a defined relative position relative to the supporting frame (4).

12. Cover (1) according to one of claims 9 to 11, **characterised in that** the extension (20) of the receptacle (16) is in the form of an internal taper and the plug-in projection (14) has, at its end, at least three radially symmetrical spreadable arms (18), so that, when the spreading-apart takes place, the plug-in projection (14) is self-centering within the receptacle (16) and self-alignment of their relative positions is obtained between the blanking frame (6) and supporting frame (4).

13. Cover (1) according to one of claims 4 to 10, **characterised in that** the screwed plug-in retaining means (10) are so arranged that, in or after the plug-in joining process, manual adjustment of their relative positions between the blanking frame (6) and supporting frame (4) can be performed manually in the direction of at least one axis of adjustment (26), the axis of adjustment (26) extending parallel to two opposing frame limbs (12).

14. Cover (1) according to one of claims 9, 10 or 13, **characterised in that** the extension (20) of the receptacle (16) comprises two opposing inner faces which are inclined in a roof-like form and the plug-in projection (16) has, at the end, two spreadable arms (18) which are opposed in a corresponding fashion to bear against the inclined inner faces, in such a way that the plug-in projection (14) can be adjusted in the receptacle (16) in the direction of an axis of symmetry of the spreadable arms (18) and of the inclined inner faces, the axis of symmetry extending parallel to the axis of adjustment (26) of the blanking and supporting frames (6, 4).

15. Cover (1) according to one of claims 9 to 14, **characterised in that** each plug-in projection (14) engages in the associated receptacle (16) at least by frictional engagement.

16. , Cover (1) according to one of claims 13 to 15, **characterised in that** each plug-in projection (14) engages in the associated receptacle (16) in such a way that it is movable therein relatively in the direction of an axis of positioning, with the axis of positioning extending parallel to the axis of adjustment (26) of the blanking and supporting frames (6, 4).

17. Cover (1) according to one of claims 13 to 16, **characterised in that** each plug-in projection (14) is substantially in the form of a hollow cylinder whose outside diameter is less than the inside diameter of the receptacle (16), which is preferably likewise of hollow cylindrical form, the plug-in projection (14) having, on its outer circumference, at least two elongated contact ribs (28) for making frictionally engaged contact in the receptacle (16), which ribs (28) extend in the direction of plugging-in, extend away from the plug-in projection (14) radially in opposite directions and extend perpendicularly to the axis of adjustment (26) or axis of positioning.

18. Cover (1) according to one of claims 13 to 17, **characterised in that** each plug-in projection (14) has, on its outer circumference, two elongated insertion ribs (30) for frictionally engaged insertion in corresponding receiving slots (32) in the receptacle (16), which insertion ribs (30) extend in the direction of insertion, extend away from the plug-in projection (14) radially in opposite directions and extend parallel to the axis of adjustment (26) or axis of positioning.

19. Cover (1) according to one of claims 1 to 18, **characterised in that** each latching plug-in connector (40) is so arranged that it allows manual adjustment between the blanking frame (6) and supporting frame (4) in the direction of an axis of adjustment (26).

20. Cover (1) according to one of claims 1 to 19, **characterised in that** each latching plug-in connector (40) comprises on the one hand two resilient latching arms (42) and on the other hand a male projection (44) which can be inserted between the latching arms (42), the latching arms (42) co-operating with the male projection (44) via inclined faces in such a way that a loading force (F) which draws the frame members (4, 6) together is generated by the resilience of the latching arms (42) via the inclined faces.

21. Cover (1) according to claim 20, **characterised in that** the male projection (44) is formed after the fashion of a blade terminal and, in the state where it is inserted between the latching arms (42), is movable relative to the latter in the direction of a transverse axis, the transverse axis extending parallel to the axis of adjustment (26).

22. Cover (1) according to one of claims 3 to 21, **characterised in that**, in regions which are masked by the blanking frame (6), the supporting frame (4) has screw holes (50), for additional fastening in position by screws in respective regions of a mounting surface which are situated next to the wiring accessory.

23. Cover (1) according to claim 22, **characterised in that** each screw hole (50) is in the form of a slotted opening.

24. Cover (1) according to claim 23 in particular, **characterised in that** a thinned section of wall (54) which can be broken out is arranged in the region of each slotted opening (50), this section of wall (54) having a circular (56) marking-out hole which is central to the slotted opening (50).

25. Cover (1) according to claim 23 or 24, **characterised in that** each slotted opening (50) is formed by two concentric slotted holes which are offset from one another at an angle.

## Revendications

1. Couvercle (1) pour des appareils d'installation électrique tels que des commutateurs, des prises et autres dispositifs équivalents, consistant en une partie du couvercle (6) pouvant être reliée à une partie de base (4) par l'intermédiaire de moyens de maintien, **caractérisé en ce que** les moyens de maintien des liaisons enfichables par emboîtement (40) sont configurés de telle sorte qu'une force de prétension (F) tirant vers l'opposé une de ces deux parties est engendrée entre la partie du couvercle (6) et la partie de base (4).

2. Couvercle selon la revendication 1, **caractérisé en ce que** la partie du couvercle (6) formée pour l'essentiel par un contour extérieur rectangulaire ou carré peut être reliée à la partie de base (4) par l'intermédiaire notamment de quatre liaisons enfichables par emboîtement (40) disposées dans ses zones de coin, chaque liaison enfichable par emboîtement (40) engendrant une prétension (F).

3. Couvercle selon la revendication 1 ou 2, **caractérisé en ce que** la partie de base est configurée comme un cadre de support (4) pouvant être fixé à l'appareil d'installation et que la partie du couvercle est configurée comme un cadre de protection (6) pouvant être fixé au cadre de support (4) qu'il recouvre, les cadres de support et de protection (4, 6) servant conjointement à recouvrir une zone superficielle entourant un insert central (2) de l'appareil d'installation.

4. Couvercle selon la revendication 3, **caractérisé en ce que** le cadre de protection (6) peut en outre être fixé au cadre de support (4) par l'intermédiaire de moyens de maintien enfichables par vis (10) de sorte qu'un montage peut uniquement être réalisé par un processus d'assemblage par enfichage et qu'un démontage peut seulement être réalisé après un processus de desserrage des vis.

5. Couvercle selon la revendication 3 ou 4, **caractérisé par** un cadre intermédiaire (8) à disposer en sandwich entre le cadre de support (4) et le cadre de protection (6).

6. Couvercle selon la revendication 5, **caractérisé en ce que** le cadre intermédiaire (8) peut notamment être fixé au cadre de protection (6) lors du prémontage.

7. Couvercle selon l'une quelconque des revendications 3 à 6, **caractérisé en ce que** dans leur état monté, relié entre eux, le cadre de support (4), le cadre de protection (6) et le cas échéant le cadre intermédiaire (8) reposent les uns sur les autres de façon pour l'essentiel coïncidente dans la zone de leurs bords extérieurs.

8. Couvercle selon l'une quelconque des revendications 4 à 7, **caractérisé en ce que** les moyens de maintien enfichables par vis (10) comportent au moins deux zones cadres diamétralement opposées, notamment respectivement des liaisons enfichables par vis disposées au milieu de la zone des montants du cadre (12) parallèles entre eux.

9. Couvercle selon la revendication 8, **caractérisé en ce que** chaque liaison enfichable par vis (10) comporte une saillie enfichable (14) du cadre de protection (6) et un logement enfichable (16) du cadre de support (4), la saillie enfichable (14) à insérer dans le logement enfichable (16) présentant à son extrémité des bras d'écartement (18), lesquels entrent en prise dans une extension (20) du logement enfichable (16) et peuvent être écartés au moyen d'une vis (22) pouvant être insérée dans la saillie enfichable (14).

10. Couvercle selon la revendication 9, **caractérisé en ce qu'**une liaison de force et/ou par complémentarité de forme est disposée entre le cadre de protection (6) et le filet de la vis (22) insérée, notamment dans la zone des bras d'écartement (18) écartés, de telle sorte que la vis (22) peut être amenée par dévissage de sa positon de montage insérée à une position de desserrage soulevant l'écartement des bras d'écartement (18).

11. Couvercle selon l'une quelconque des revendications 4 à 10, **caractérisé en ce que** les moyens de maintien enfichables par vis (10) sont configurés de telle sorte que le processus d'enfichage entraîne un alignement automatique du cadre de protection (6) sur le cadre de support (4) dans une position relative définie.

12. Couvercle selon l'une quelconque des revendications 9 à 11, **caractérisé en ce que** l'extension (20) du logement enfichable (16) est configurée comme un cône intérieur et que la saillie enfichable (14) présente du côté de son extrémité au moins trois bras d'écartement (18) radialement symétriques de manière à permettre lors de leur écartement un autocentrage de la saillie enfichable (14) à l'intérieur du logement enfichable (16) et donc un autoalignement de la position relative entre le cadre de protection (6) et le cadre de support (4).

13. Couvercle selon l'une quelconque des revendications 4 à 10, **caractérisé en ce que** les moyens de maintien enfichables par vis (10) sont configurés de telle sorte qu'un ajustage manuel de la position relative entre le cadre de protection (6) et le cadre de support (4) en direction au moins d'un axe d'ajustage (26) peut être réalisé lors du processus d'assemblage par enfichage ou après lui, l'axe d'ajustage (26) étant parallèle aux deux montants du cadre (12) opposés.

14. Couvercle selon l'une quelconque des revendications 9, 10 ou 13, **caractérisé en ce que** l'extension (20) du logement enfichable (16) comporte deux surfaces intérieures opposées, obliques en forme de toit et que la saillie enfichable (16) présente du côté de son extrémité deux bras d'écartement (18) opposés aux surfaces intérieures obliques par rapport à l'installation de telle sorte que la saillie enfichable (14) peut être ajustée dans le logement enfichable (16) en direction d'un axe de symétrie des bras d'écartement (18) et des surfaces intérieures obliques, l'axe de symétrie étant parallèle à l'axe d'ajustage (26) des cadres de protection et de support (6, 4).

15. Couvercle selon l'une quelconque des revendications 9 à 14, **caractérisé en ce que** chaque saillie enfichable (14) entre en prise au moins par liaison de force dans le logement enfichable (16) correspondant.

16. Couvercle selon l'une quelconque des revendications 13 à 15, **caractérisé en ce que** chaque saillie enfichable (14) entre en prise dans le logement enfichable (16) correspondant de telle sorte qu'elle puisse être relativement mobile en lui en direction d'un axe de réglage, l'axe de réglage étant parallèle à l'axe d'ajustage (26) des cadres de protection et de support (6, 4).

17. Couvercle selon l'une quelconque des revendications 13 à 16, **caractérisé en ce que** chaque saillie enfichable (14) est pour l'essentiel configurée comme un cylindre creux ayant un diamètre extérieur inférieur au diamètre intérieur du logement enfichable (16) présentant lui aussi une forme de cylindre creux de façon préférée, la saillie enfichable (14) présentant sur son périmètre extérieur au moins deux nervures de contact (28) longitudinales s'étendant dans la direction d'enfichage, depuis la saillie enfichable (14), radialement dans des directions opposées et perpendiculairement à l'axe d'ajustage (26) ou à l'axe de réglage pour être disposées par liaison de force dans le logement enfichable (16).

18. Couvercle selon l'une quelconque des revendications 13 à 17, **caractérisé en ce que** chaque saillie enfichable (14) présente sur son périmètre extérieur au moins deux nervures d'enfichage (30) longitudinales s'étendant dans la direction d'enfichage, depuis la saillie enfichable (14), radialement dans des directions opposées et parallèlement à l'axe d'ajustage (26) ou à l'axe de réglage pour leur insertion par liaison de force dans la fente de logement (32) correspondante du logement enfichable (16).

19. Couvercle selon l'une quelconque des revendications 1 à 18, **caractérisé en ce que** chaque liaison enfichable par emboîtement (40) est configurée de manière à permettre un ajustage manuel entre le cadre de protection (6) et le cadre de support (4) en direction d'un axe d'ajustage (26).

20. Couvercle selon l'une quelconque des revendications 1 à 19, **caractérisé en ce que** chaque liaison enfichable par emboîtement (40) comporte d'une part deux bras d'emboîtement (42) élastiquement déformables par ressort et d'autre part une saillie enfichable (44) pouvant être insérée entre les bras d'emboîtement (42), les bras d'emboîtement (42) pouvant entrer en interaction avec la saillie enfichable (44) par l'intermédiaire des surfaces obliques de telle sorte que leur élasticité par ressort engendre la prétension (F) resserrant les parties du cadre (4, 6) par l'intermédiaire des surfaces obliques.

21. Couvercle selon la revendication 20, **caractérisé en ce que** la saillie enfichable (44) est configurée selon l'art d'une fiche plate et qu'elle peut être mobile dans son état inséré entre les bras d'emboîtement (42) par rapport à ceux-ci en direction d'un axe transversal, l'axe transversal étant parallèle à l'axe d'ajustage (26).

22. Couvercle selon l'une quelconque des revendications 3 à 21, **caractérisé en ce que** le cadre de support (4) présente des trous de vis (50) dans les zones recouvertes par le cadre de protection (6) pour une fixation par vis supplémentaire dans la zone d'une surface de montage située à chaque fois à côté de l'appareil d'installation.

23. Couvercle selon la revendication 22, **caractérisé en ce que** chaque trou de vis (50) est configuré comme une ouverture de trou oblong.

24. Couvercle notamment selon la revendication 23, **caractérisé en ce qu'**un segment de paroi (54) aminci, pliable vers l'extérieur, est disposé dans la zone de chaque ouverture de trou oblong (50), ce segment de paroi (54) présentant un trou fissuré (56) circulaire, centré par rapport à l'ouverture de trou oblong (50).

25. Couvercle selon la revendication 23 ou 24, **caractérisé en ce que** chaque ouverture de trou oblong (50) est formée par deux trous oblongs concentriques décalés angulairement l'un par rapport à l'autre.
